# EUROPÄISCHE PATENTSCHRIFT

(11) **EP 0 601 405 B1**
(45) Veröffentlichungstag und Bekanntmachung des Hinweises auf die Patenterteilung: **30.07.1997**
(21) Anmeldenummer: 93118987.2
(22) Anmeldetag: 25.11.1993
(51) Int. Cl.: C08G 77/60, C04B 35/58

(54) **Polymere Borosilazane und Alumosilazana, Verfahren zu ihrer Herstellung sowie deren Verwendung**
Polymeric borosilazanes and alumosilazanes and their use
Borosilazanes et alumosilazanes polymériques et leur utilisation

(30) Priorität: 08.12.1992 DE 4241288
(43) Veröffentlichungstag der Anmeldung: 15.06.1994
(73) Patentinhaber: BAYER AG, 51368 Leverkusen (DE)
(72) Erfinder: Löffelholz, Josua, Dipl.-Chem., D-53225 Bonn (DE); Jansen, Martin, Prof.Dr., D-53127 Bonn (DE)

(56) Entgegenhaltungen:
- EP-A- 0 262 914

## Beschreibung

Die vorliegende Erfindung betrifft polymere Boro- und Alumosilazane der allgemeinen Formel 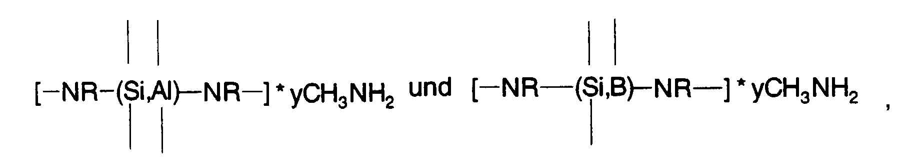 wobei jedes Silicium und Aluminiumatom durch vier Stickstoffatome, jedes Boratom durch mindestens zwei Stickstoff- und maximal einem Wasserstoffatom dreifach koordiniert ist, Verfahren zur Herstellung dieser Polymeren sowie deren Verwendung als Vorläuferverbindungen für keramische Hochleistungswerkstoffe.

In den letzten Jahren hat sich ein wachsendes Interesse an präkeramischen Polymeren entwickelt, welche durch Pyrolyse in nitridische oder carbonitrische keramische Materialien überführt werden können. Die Arbeiten konzentrierten sich dabei vornehmlich auf die Synthese von Precursoren für reine Nitride/Carbonitride eines Elementes wie Si₃N₄, AlN, BN, Si₃N₄/SiC.

Siliciumnitrid ist als Hochleistungswerkstoff für stark beanspruchte Teile wie Turbolader, Turbinen oder Brennkammerauskleidungen aufgrund seiner Festigkeit und Hochtemperaturbeständigkeit prinzipiell gut geeignet. Durch Herstellung von Mischkeramiken lassen sich darüber hinaus bestimmte Eigenschaften dieses Werkstoffes gemäß seinem späteren Anwendungsbereich optimieren. So berichten Ruh et al. [J. Am. Ceram. Soc. 1981, 64, 415] über eine gegenüber reinem Siliciumnitrid erhöhte Thermoschockbeständigkeit jedoch verminderte Festigkeit von Bor-Silicium-Nitridmischkeramiken. Aluminiumnitrid weist hingegen eine gegenüber Siliciumnitrid stark verbesserte thermische Leitfähigkeit auf [Ceram. Bull. 1990, 69, 1801]. In JP-A 63 256 587 wird über Si/Al/N Keramikschichten mit verbesserten abrasiven Eigenschaften berichtet.

Komposit- und Mischkeramiken werden herkömmlicherweise durch Pulvertechnologie hergestellt. Nitride der betreffenden Elemente werden sogfältig vermahlen und danach gesintert. Dabei verbleiben die Komponenten auch nach Heizpressen bei 1 750°C als diskrete Phasen im Material zurück, da die Diffusionskonstanten in kovalenten Nitriden selbst bei den höheren Drücken vernachlässigbar klein sind. Trotz sorgfältiger Homogenisierung der Ausgangsmaterialien treten deshalb aufgrund einer statistischen Verteilung der Primärteilchen mikroskopische Inhomogenitäten auf, die zum Teil für die geringen Festigkeiten der Komposite verantwortlich sind. Eine weitere Einbuße in den Eigenschaften erfährt das Material durch Verunreinigungen der Edukte durch Mahlabrieb, zusätzlich zu den ohnehin schon vorhandenen oxidischen Verunreinigungen sowie eventuell zugefügten Sinterhilfsmitteln. Dies äußert sich in Mängeln wie langsamen Rißwachstum, geringer Thermoschockbeständigkeit und Abnahme der Hochtemperaturfestigkeit.

Ein möglicher Weg zur Verbesserung der Homogenität solcher Keramiken wird in EP-A-389 084 und in EP-A-0 424 082 beschrieben. Dabei werden lösliche polymere Silazane mit funktionellen Si-H- und/oder Si-N-Gruppen mit einer löslichen bororganischen Verbindung umgesetzt. Beide Autoren erhalten ein lösliches Polyborosilazan, welches im weiteren zu einer Bor-Siliciumnitrid- bzw. carbonitridkeramik pyrolysiert werden kann. Dieses Verfahren führt aber naturgemäß nicht zu einer absolut homogenen Verteilung von Bor in der Keramik, da ein polymeres Silazanedukt eingesetzt wird, welches als Block während der Reaktion erhalten bleibt.

EP-A-0 262 914 beschreibt polymere Silazane, bei denen die Si-Atome mit zwei Gruppen R=H oder Kohlenwasserstoff verbunden sind.

Aufgabe der Erfindung ist die Bereitstellung neuartiger, einfach und in hohen Ausbeuten darstellbarer polymerer Polyalumo- oder Polyborosilazane sowie eines Verfahrens zur Herstellung von nitridischen oder carbonitridischen Keramiken welche nur aus Si, Al, N, C oder Si, B, N, C bestehen. Weiterhin sollen diese Polymere ein Maßschneidern der für die jeweiligen Anwendungen erforderlichen Werkstoffeigenschaften ermöglichen, dadurch daß sie ein in weiten Grenzen variables Si/Al- oder Si/B-Verhältnis zulassen und zu nitridischem oder carbonitridischem keramischen Material pyrolysiert werden können. Darüber hinaus sollen die Polymere eine homogene Elementverteilung besitzen.

Die Anforderungen wurden durch folgende Polymere erfüllt, die Gegenstand dieser Erfindung sind. Es handelt sich dabei um polymere Alumosilazane der allgemeinen Strukturformel 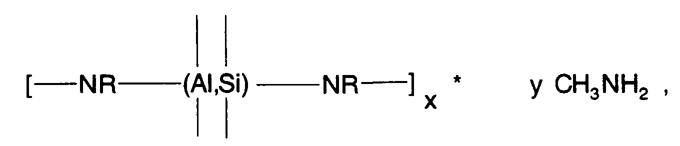 wobei jedes Si-, Al-Atom durch vier Stickstoffatome koordiniert ist, welche dadurch gekennzeichnet sind, daß jedes Stickstoffatom einen organischen Rest R trägt, worin R = C₁-C₆-Alkyl, Vinyl, Phenyl sind und x Werte größer als fünf sind.

Gegenstand dieser Erfindung sind weiterhin polymere Borosilazane der allgemeinen Strukturformel 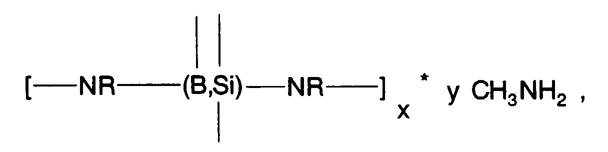 wobei jedes Si-Atom vier Stickstoff, jedes B-Atom durch mindestens zwei Stickstoff- und maximal einem Wasserstoffatom dreifach koordiniert ist, welche dadurch gekennzeichnet sind, daß jedes Stickstoffatom einen organischen Rest R trägt, worin R = C₁-C₆-Alkyl, Vinyl, Phenyl sind und x Werte größer als fünf sind.

In einer bevorzugten Ausführungsform weisen die erfindungsgemäßen Boro- und Alumosilazane einen Chloridgehalt <20 ppm auf.

Gegenstand dieser Erfindung sind weiterhin Verfahren zur Herstellung der erfindungsgemäßen polymeren Boro- und Alumosilazane.

Zur Herstellung der polymeren Alumosilazane wird ein Tetrakisorganoaminosilan der Formel Si(NHR)₄, worin R = C₁-C₆-Alkyl, Vinyl, Phenyl bedeutet, in einem organischen Lösungsmittel mit BH₃ unter H₂-Abspaltung kondensiert, wobei als Boran-Komponente komplex gebundenes BH₃ ∗ Y, worin Y = eine Lewisbase wie S(CH₃)₂, N(CH₃)₃, C₅H₅N, S(C₂H₅)₂, P(CH₃)₃, AsPh₃, Tetrahydrofuran, O(CH₃)₂, O(C₂H₅)₂, CNCH₃ sein kann, eingesetzt wird.

Zur Herstellung der polymeren Borosilazane wird ein Tetrakisorganoaminosilan der Formel Si(NHR)₄, worin R = C₁-C₆-Alkyl, Vinyl, Phenyl bedeutet, in einem organischen Lösungsmittel mit AlH₃ unter H₂-Abspaltung kondensiert, wobei als AlH₃₋Komponente polymere (AlH₂)ₓ* Y oder komplex gebundenes AlH₃* Y, worin Y = eine Lewisbase wie S(CH₃)₂, N(CH₃)₃, C₅H₅N, S(C₂H₅)₂, P(CH₃(₃, AsPh₃, Tetrahydrofuran, O(CH₃)₂, O(C₂H₅)₂, CNCH₃ sein kann, eingesetzt wird.

In einer bevorzugten Ausführungsform wird die Reaktion zunächst bei maximal -40°C, später bei Temperaturen zwischen 20-150°C in einem aprotischen Lösungsmittel wie Toluol, C₅-C₈-Alkanen, tertiären Aminen oder Ethern durchgeführt. Das Molverhältnis von Silazan zu Alan bzw. Boran kann im weiten Bereich von Si/B,Al >1 variiert werden, bevorzugt im Bereich von Si/B,Al 20:1 bis 1:1. Die Umsetzung unter H₂-Abspaltung verläuft vollständig unter Knüpfung der gewünschten Si-N-Al,B-Bindung.

Die erfindungsgemäßen Polymere sind in den gebräuchlichen organischen Lösungsmitteln löslich und weisen Molmassen >800 g/Mol auf.

Die Polymere können direkt in Lösung verschiedenen Formgebungsprozessen unterzogen werden, wie Verspinnen zu Fasern, Ziehen von Folien, Herstellung von Beschichtungen durch verschiedene Coating-Verfahren (Dip-Coating, Spin-Coating).

Die Viskosität der Lösung läßt sich über die Konzentrationen des Polymeren in Lösung in weiten Bereichen variieren und erlaubt eine Optimierung der für das weitere Processing benötigten Eigenschaften.

Zur Herstellung von Pulvern wird das Lösungsmittel bevorzugt im Vakuum entfernt. Geeignet sind auch andere gebräuchliche Trockenverfahren.

Gegenstand ist daher auch die Herstellung von keramischen Pulvern, Fasern, Folien oder Beschichtungen in dem System Si/Al/N/C oder Si/B/N/C durch Pyrolyse in inerter oder NH₃-haltiger Atmosphäre bei Temperaturen von 600-2000°C.

In einer bevorzugten Ausführungsform werden die Polymere zur Synthese von rein nitridischem Material bei Temperaturen zwischen 800-1100°C im NH₃-Strom pyrolysiert und anschließend zur Entfernung des restlichen Wasserstoffs bei Temperaturen zwischen 1400-1700°C in N₂-Atmosphäre calciniert. Zur Synthese von carbonitridischem Material führt man den ersten Calcinierungsschritt im N₂-Strom durch. Elektronenmikroskopische Aufnahmen belegen, daß mindestens bis zu einer lateralen Abmessung von 0,5 µm eine völlig homogene Elementverteilung vorliegt.

Im folgenden ist die Erfindung beispielhaft erläutert, ohne daß hierin eine Einschränkung zu sehen ist.

### Beispiel 1

### Darstellung eines Polyalumosilazans mit einem Si/Al-Verhältnis von 2:1

Kondensation von AlH₃-Etherat und Si(NHCH₃)₄ (TMAS) in Diethylenglyciddimethylether (Diglyme)

### Gleichung:

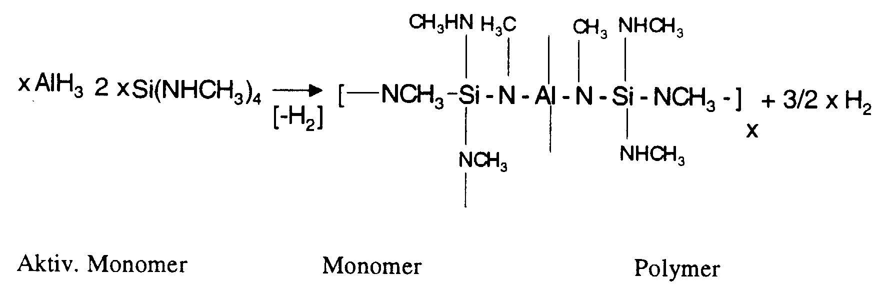

### Ansatz:

| | |
|---|---|
| 5 g AlH₃ *0.3 Et₂O = | 95,8 mmol |
| 28,3 g TMAS = | 292,6 mmol |
| 500 ml Diglyme, über Na getrocknet | |

### Versuchsaufbau:

1000 ml Dreihalskolben, 500 ml Tropftrichter mit Druckausgleich, Blasenzähler, Magnetrührer, Dewar mit EtOH-Trockeneis, Argonzuleitung

### Versuchsdurchführung:

Die Apparatur wird ausgeheizt und mit Argon geflutet. Zu einer Suspension von 5 g Aluminiumhydrid-Etherat in 200 ml Diglyme werden 28,3 g TMAS in 300 ml Diglyme unter Rühren bei -78°C getropft. Man läßt während 12 h auf Raumtemperatur aufwärmen und rührt weitere 24 h. Danach wird 3 h bei 180°C refluxiert. Das Lösungsmittel wird im Vakuum abgezogen.

### Ergebnis:

29,8 g lösliches Alumosilazanpolymer, weißgelb (89 %)

### Analytik:

Infrarotspektrum (IR):
3420,s, cm⁻¹, (N-H); 2920,s, 2890,s, cm⁻¹, (C-H); 2625,w, cm⁻¹, δ(N-H); 1465,m, 1380,m, cm⁻¹, δ(C-H); 1185,m, cm⁻¹ (N-C), 1050,ss, cm⁻¹, (Si-N); 1050,ss, cm⁻¹, (Al-N); 450,m, cm⁻¹; δ(Si-N); 450,m, cm⁻¹, δ(Al-N).

Pulverdiffraktogramm (XRD):
Amorph

Energiedispersive Röntgenanalyse (EDX):
homogenes Polymer, Al-Si-Verhältnis 1:2

### Beispiel 2

### Pyrolyse des Polyalumosilazans mit einem Si/Al-Verhältnis von 2:1

### Gleichung:

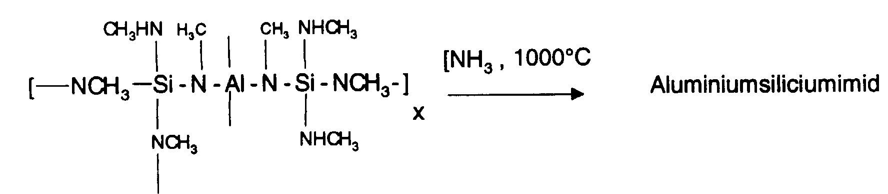

### Ansatz:

5 g Polymer nach Beispiel 1

### Versuchsdurchführung:

Das Polymer wird 12 h bei 1000°C im Ammoniakstrom pyrolysiert.

### Ergebnis:

Man erhält 3,2 g eines hellgrauen amorphen Pulvers. Dies entspricht einer keramischen Ausbeute von 64 %.

### Analytik:

- IR:: 3400,w, cm⁻¹, (N-H); 1040,ss, cm⁻¹, (Si-N); 1040,ss, cm⁻¹, (Al-N); 460,m, cm⁻¹, δ(Si-N); 460,m, cm⁻¹, δ(Al-N).
- XRD:: Amorph
- EDX:: homogene Elementverteilung, mindestens bis zur Auflösung von 0,5 µm.

### Beispiel 3

### Darstellung eines Polyalumosilazans mit einem Si/Al-Verhältnis von 1:1

Kondensation von AlH₃*2NMe₃ und Si(NHCH₃)₄ (TMAS) in NEt₃

### Gleichung:

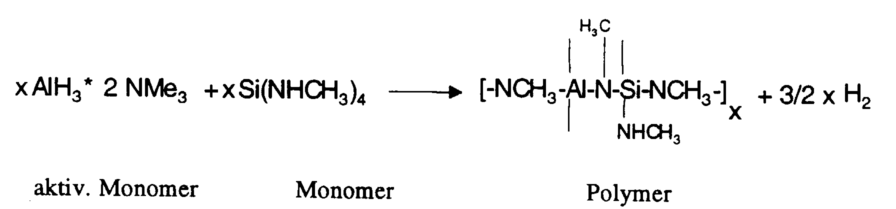

### Ansatz:

| | |
|---|---|
| 5 g AlH₃ *2 NMe₃ = | 337 mmol |
| 5 g TMAS = | 337 mmol |
| 400 ml Triethylamin, über KOH getrocknet | |

### Versuchsaufbau:

1000 ml Dreihalskolben, 500 ml Tropftrichter mit Druckausgleich, Blasenzähler, Magnetrührer, Dewar mit EtOH-Trockeneis, Argonzuleitung.

### Versuchsdurchführung:

Die Apparatur wird ausgeheizt und mit Argon geflutet. Zu einer Lösung von 5 g Aluminiumhydrid-trimethylaminkomplex in 200 ml Triethylamin werden 5 g TMAS in 200 ml Triethylamin unter Rühren bei -78°C getropft. Man läßt während 12 h auf Raumtemperatur aufwärmen und rührt weitere 6 h. Das Lösungsmittel wird im Vakuum abgezogen.

### Ergebnis:

5,5 g lösliches Alumosilazanpolymer, weiß (93 % Ausbeute)

### Analytik:

- IR:: 3320,w, cm⁻¹, (N-H); 2880,s, 2800,s, cm⁻¹, (C-H); 1610,w, cm⁻¹, δ (N-H); 1465,m, 1375,m, cm⁻¹, δ(C-H); 1165,w, cm⁻¹, (N-C); 1050,ss, cm⁻¹, (Si-N); 1050,ss, cm⁻¹, (Al-N); 450,m, cm⁻¹, δ(Si-N); 450,m, cm⁻¹, δ(Al-N).
- XRD:: Amorph
- EDX:: homogenes Polymer, Al-Si-Verhältnis 1:1

### Beispiel 4

### Pyrolyse des Polyalumosilazans mit einem Si/Al-Verhältnis von 1:

### Gleichung:

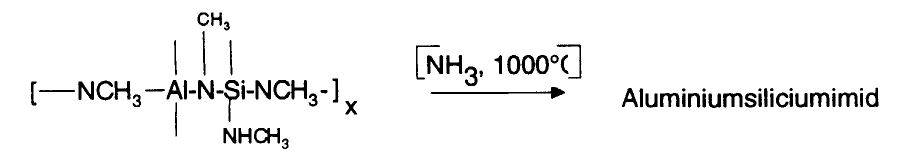

### Ansatz:

5 g Polymer nach Beispiel 3

### Versuchsdurchführung:

Das Polymer wird 12 h bei 1000°C im Ammoniakstrom pyrolysiert.

### Ergebnis:

Man erhält 3,4 g eines weißen amorphen Pulvers. Dies entspricht einer keramischen Ausbeute von 68 %.

### Analytik:

- IR:: 3320,w, cm⁻¹, (N-H); 1060,ss, cm⁻¹, (Si-N); 1060,ss, cm⁻¹, (Al-N); 460,m, cm⁻¹, δ(Si-N); 460,m, cm⁻¹, δ(Al-N).
- XRD:: Amorph
- EDX:: homogene Elementverteilung, mindestens bis zur Auflösung von 0,5 µm.

### Beispiel 5

### Darstellung eines Polyalumosilazans mit einem Si/Al-Verhältnis von 4:1

Kondensation von AlH₃* 2NMe₃ und Si(NHCH₃)₄ (TMAS) in Toluol

### Gleichung:

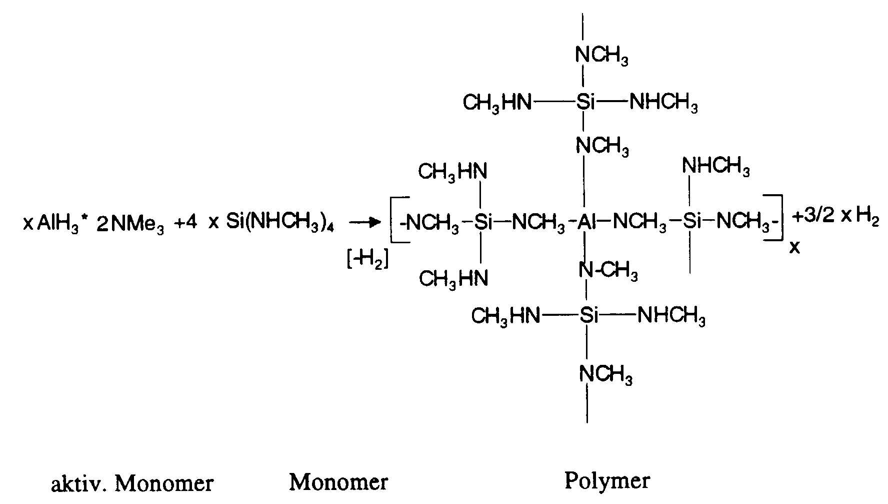

### Ansatz:

| | |
|---|---|
| 2,5 g AlH₃ *2 NMe₃ = | 169 mmol |
| 10 g TMAS = | 674 mmol |
| 400 ml Toluol, über KOH getrocknet | |

### Versuchsaufbau:

1000 ml Dreihalskolben, 500 ml Tropftrichter mit Druckausgleich, Blasenzähler, Magnetrührer, Dewar mit EtOH-Trockeneis, Argonzuleitung.

### Versuchsdurchführung:

Die Apparatur wird ausgeheizt und mit Argon geflutet. Zu einer Lösung von 2,5 g Aluminiumhydrid-trimethylaminkomplex in 200 ml Toluol werden 10 g TMAS in 200 ml Toluol unter Rühren bei -78°C getropft. Man läßt während 12 h auf Raumtemperatur aufwärmen und rührt weitere 6 h. Das Lösungsmittel wird im Vakuum abgezogen.

### Ergebnis:

11,2 g lösliches Alumosilazanpolymer, farblos (95 % Ausbeute)

### Analytik:

- IR:: 3340, s, cm⁻¹, (N-H); 2920, s, 2800, m, cm⁻¹, (C-H); 1550, w, cm⁻¹, δ (N-H; 1460, w, cm⁻¹, δ (C-H); 1020, ss, cm⁻¹, (Si-N); 1020, ss, cm⁻¹, (Al-N); 450, m, cm⁻¹, δ (Si-N); 450,m, cm⁻¹, δ (Al-N).
- XRD:: Amorph
- EDX:: homogenes Polymer, Si/Al-Verhältnis 4:1 bis zur Auflösung von mindestens 0,5 µm.

### Beispiel 6

### Pyrolyse des Polyalumosilazans mit einem Si/Al-Verhältnis von 4:1

### Gleichung:

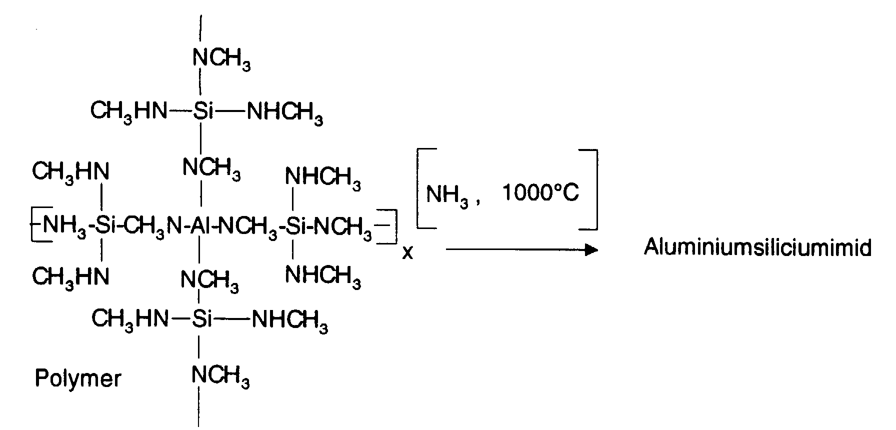

### Ansatz:

5 g Polymer nach Beispiel 5

### Versuchsdurchführung:

Das Polymer wird 12 h bei 1000°C im Ammoniakstrom pyrolysiert.

### Ergebnis:

Man erhält 3,2 g eines weißen amorphen Pulvers. Dies entspricht einer keramischen Ausbeute von 64 %.

### Analytik:

- IR:: 3260, w, cm⁻¹, (N-H); 1040, ss, cm⁻¹, (Si-N); 1040, ss, cm⁻¹, (Al-N); 470, m, cm⁻¹, δ (Si-N); 470, m, cm⁻¹, δ (Al-N).
- XRD:: Amorph
- EDX:: homogene Elementverteilung, mindestens bis zur Auflösung von 0,5 µm.

### Beispiel 7

### Darstellung eines Polyborosilazans mit einem Si/B-Verhältnis von 2:1

Kondensation von BH₃ und TMAS in Toluol

### Gleichung:

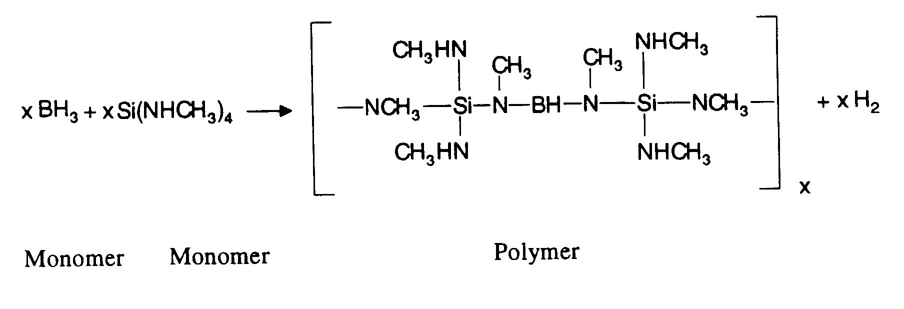

### Ansatz:

| | |
|---|---|
| 1,41g BH₃* NMe₃ = | 19,4 mmol |
| 22,96 gTMAS = | 155,2 mmol |
| 500 ml Toluol, über Na getrocknet | |

### Versuchsaufbau:

1000 ml Dreihals-Kolben, 250 ml Tropftrichter mit Druckausgleich, Blasenzähler, Argonzuleitung, Magnetrührer.

### Versuchsdurchführung:

Die Apparatur wird ausgeheizt und mit Argon geflutet. Eine Lösung von 1,41 g Boran-Trimethylaminkomplex in 100 ml Toluol werden unter Rühren zu 22,96 g TMAS in 400 ml Toluol bei Raumtemperatur während 30 min getropft. Man rührt 24 h bei Raumtemperatur und refluxiert anschließend 3 h. Das Lösungsmittel wird im Vakuum abgezogen.

### Ergebnis:

17,4 g lösliches Borosilazanpolymer, weiß (Ausbeute 94 %).

### Analytik:

- IR:: 3440 cm⁻¹, (N-H); 2890, 2810 cm⁻¹, (C-H); 2370 cm⁻¹, (B-H); 1600 cm⁻¹, δ (N-H); 1460 cm⁻¹, δ (C-H); 1210 cm⁻¹, (N-C); 1360 cm⁻¹, (B-N); 1090, 940 cm⁻¹, (Si-N); 800, 470 cm⁻¹, δ (Si-N); cm⁻¹.
- XRD:: Amorph

### Beispiel 8

### Pyrolyse des Polyborosilazans mit einem Si/B-Verhältnis von 2:1

### Gleichung:

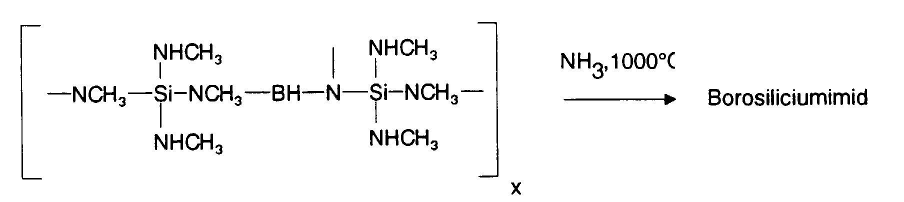

### Ansatz:

5 g Polymer nach Beispiel 7

### Versuchsdurchführung:

Das Polymer wird 12 h bei 1000°C im Ammoniakstrom pyrolysiert.

### Ergebnis:

Man erhält 2,7 g eines weißen amorphen Pulvers. Dies entspricht einer keramischen Ausbeute von 54 %.

### Analytik:

- IR:: 3400 cm⁻¹, (NH); 2200 cm⁻¹, (B-H); 950 cm⁻¹, (Si-N); 1350 cm⁻¹, (B-N); 460 cm⁻¹, δ (Si-N);
- XRD:: Amorph

### Beispiel 9

### Darstellung eines Polyborosilazans mit einem Si/B-Verhältnis von 1:1

Kondensation von BH₃ *NMe₃ und Si(NHCH₃)₄ (TMAS) in THF

### Gleichung:

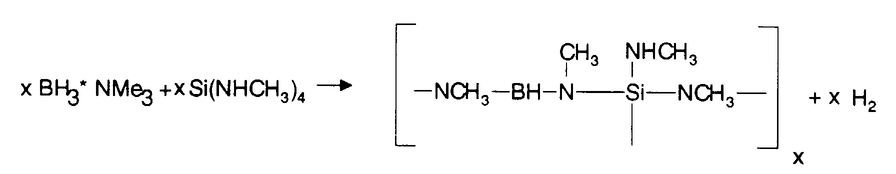

### Ansatz:

| | |
|---|---|
| 2,45 g BH₃*NMe₃ = | 337 mmol |
| 5 g TMAS = | 337 mmol |
| 400 ml THF, über Na getrocknet | |

### Versuchsaufbau:

1000 ml Dreihalskolben, 500 ml Tropftrichter mit Druckausgleich, Blasenzähler, Magnetrührer, Dewar mit EtOH-Trockeneis, Argonzuleitung.

### Versuchsdurchführung:

Die Apparatur wird ausgeheizt und mit Argon geflutet. Zu einer Lösung von 2,45 g Boran-Trimethylaminkomplex in 200 ml THF werden 5 g TMAS in 200 ml THF unter Rühren bei -78°C getropft. Man läßt während 12 h auf Raumtemperatur aufwärmen und rührt weitere 6 h. Das Lösungsmittel wird im Vakuum abgezogen.

### Ergebnis:

5,1 g lösliches Borosilazanpolymer, weiß (96 % Ausbeute).

### Analytik:

- IR:: 3440 cm⁻¹, (N-H); 2890, 2810 cm⁻¹, (C-H); 2360 cm⁻¹, (B-H): 1600 cm⁻¹, δ (N-H); 1460 cm⁻¹, δ (C-H); 1210 cm⁻¹, (N-C); 1360 cm⁻¹, (B-N); 1090, 1050 cm⁻¹, (Si-N); 800, 450 cm⁻¹, δ (Si-N); cm⁻¹.
- XRD:: Amorph

### Beispiel 10

### Pyrolyse des Kondensationsproduktes von BH₃* NMe₃ und Si(NHCH₃)₄ (TMAS):

### Gleichung:

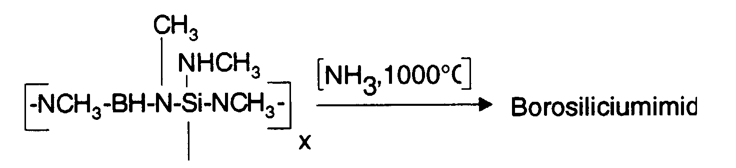

### Ansatz:

5 g Polymer nach Beispiel 9

### Versuchsdurchführung:

Das Polymer wird 12 h bei 1000°C im Ammoniakstrom pyrolysiert.

### Ergebnis:

Man erhält 3,0 g eines weißen amorphen Pulvers. Dies entspricht einer keramischen Ausbeute von 60 %.

### Analytik:

- IR:: 3400 cm⁻¹, (N-H); 2200 cm⁻¹, (B-H); 950 cm⁻¹, (Si-N); 1350 cm⁻¹, (B-N); 460 cm⁻¹, δ (Si-N);
- XRD:: Amorph

## Patentansprüche

1. Polymere Alumosilazane der allgemeinen Strukturformel 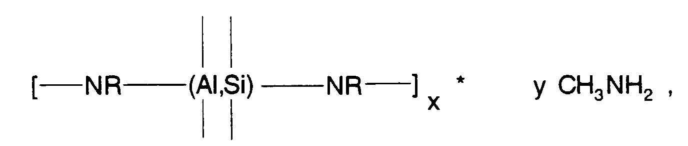 wobei jedes Si,Al-Atom durch vier Stickstoffatome koordiniert ist, dadurch gekennzeichnet, daß jedes Stickstoffatom einen organischen Rest R trägt, worin R = C₁-C₆-Alkyl, Vinyl, Phenyl bedeutet und x Werte von größer als fünf einnimmt.

2. Polymere Alumosilazane gemäß Anspruch 1, dadurch gekennzeichnet, daß sie einen Chloridgehalt <20 ppm aufweisen.

3. Polymere Borosilazane der allgemeinen Strukturformel 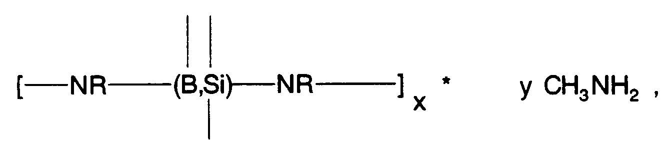 wobei jedes Si-Atom durch vier Stickstoffatome, jedes B-Atom durch mindestens zwei Stickstoff- und maximal einem Wasserstoffatom dreifach koordiniert ist, dadurch gekennzeichnet, daß jedes Stickstoffatom einen organischen Rest R trägt, worin R = C₁-C₆-Alkyl, Vinyl, Phenyl bedeutet und x Werte größer als fünf einnimmt.

4. Polymere Borosilazane gemäß Anspruch 3, dadurch gekennzeichnet, daß sie einen Chloridgehalt <20 ppm aufweisen.

5. Verfahren zur Herstellung der polymeren Alumosilazane gemäß einem der Ansprüche 1 oder 2, dadurch gekennzeichnet, daß ein Tetrakisorganoaminosilan der Formel Si(NHR)₄, worin R = C₁-C₆-Alkyl, Vinyl, Phenyl bedeutet, in einem organischen Lösungsmittel mit einer AlH₃-Komponente unter H₂-Abspaltung kondensiert werden.

6. Verfahren gemäß Anspruch 5, dadurch gekennzeichnet, daß als AlH₃-Komponente eine Verbindung AlH₃*Y, worin Y = eine Lewisbase wie S(CH₃)₂, N(CH₃)₃, C₅H₅N, S(C₂H₅)₂,P(CH₃)₃, AsPh₃, Tetrahydrofuran, O(CH₃)₂, O(C₂H₅)₂, CNCH₃ sein kann, eingesetzt wird.

7. Verfahren zur Herstellung der polymeren Borosilazane gemäß einem der Ansprüche 3 oder 4, dadurch gekennzeichnet, daß ein Tetrakisorganoaminosilan der Formel Si(NHR)₄, worin R = C₁-C₆-Alkyl, Vinyl, Phenyl bedeutet, in einem organischen Lösungsmittel mit einer BH₃-Komponente unter H₂-Abspaltung kondensiert werden.

8. Verfahren gemäß Anspruch 5, dadurch gekennzeichnet, daß als BH₃-Komponente ein Borankomponente-Komplex gebundenes BH₃*Y, worin Y = eine Lewisbase wie S(CH₃)₂, N(CH₃)₃, C₅H₅N, S(C₂H₅)₂,P(CH₃)₃, AsPh₃, Tetrahydrofuran, O(CH₃)₂, O(C₂H₅)₂, CNCH₃ sein kann, eingesetzt wird.

9. Verwendung der polymeren Boro- und Alumosilazane gemäß einem oder mehreren der Ansprüche 1 bis 8, zur Herstellung von keramischem Material in dem System Si/Al/N/C oder Si/B/N/C durch Pyrolyse in inerter, N₂- oder NH₃-haltiger Atmosphäre bei Temperaturen von 600 bis 2000°C.

10. Verwendung der polymeren Boro- und Alumosilazane gemäß einem oder mehreren der Ansprüche 1 bis 8, zur Herstellung von keramischen Fasern oder Beschichtungen in dem System Si/Al/N/C oder Si/B/N/C durch Pyrolyse in inerter, N₂- oder NH₃-haltiger Atmosphäre bei Temperaturen von 600 bis 2000°C.

## Claims

1. Polymeric aluminosilazanes of the general structural formula 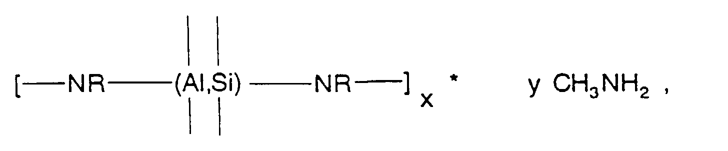 in which each Si,Al atom is coordinated by four nitrogen atoms, characterised in that each nitrogen atom bears an organic residue R, in which R means C₁-C₆ alkyl, vinyl, phenyl and x assumes values of greater than five.

2. Polymeric aluminosilazanes according to claim 1, characterised in that they have a chloride content of < 20 ppm.

3. Polymeric borosilazanes of the general structural formula 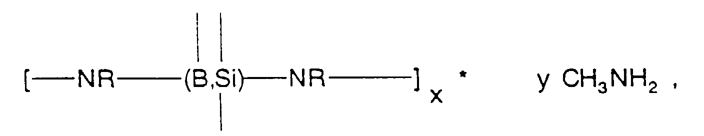 wherein each Si atom is coordinated by four nitrogen atoms, each B atom is triply coordinated by at least two nitrogen and at most one hydrogen atom,
characterised in that each nitrogen atom bears an organic residue R, in which R means C₁-C₆ alkyl, vinyl, phenyl and x assumes values of greater than five.

4. Polymeric borosilazanes according to claim 3, characterised in that they have a chloride content of < 20 ppm.

5. Process for the production of the polymeric aluminosilazanes according to one of claims 1 or 2, characterised in that a tetrakisorganoaminosilane of the formula Si(NHR)₄, in which R means C₁-C₆ alkyl, vinyl, phenyl, is condensed with an AlH₃ component in an organic solvent with elimination of H₂.

6. Process according to claim 5, characterised in that the AlH₃ component used is a compound AlH₃*Y, in which Y may be a Lewis base such as S(CH₃)₂, N(CH₃)₃, C₅H₅N, S(C₂H₅)₂, P(CH₃)₃, AsPh₃, tetrahydrofuran, O(CH₃)₂, O(C₂H₅)₂, CNCH₃.

7. Process for the production of the polymeric borosilazanes according to one of claims 3 or 4, characterised in that a tetrakisorganoaminosilane of the formula Si(NHR)₄, in which R means C₁-C₆ alkyl, vinyl, phenyl, is condensed with a BH₃ component in an organic solvent with elimination of H₂.

8. Process according to claim 5, characterised in that the BH₃ component used is a complexed borane component BH₃*Y, in which Y may be a Lewis base such as S(CH₃)₂, N(CH₃)₃, C₅H₅N, S(C₂H₅)₂, P(CH₃)₃, AsPh₃, tetrahydrofuran, O(CH₃)₂, O(C₂H₅)₂, CNCH₃.

9. Use of the polymeric boro- and aluminosilazanes according to one of more of claims 1 to 8 for the production of ceramic material in the Si/Al/N/C or Si/B/N/C system by pyrolysis in an inert atmosphere containing N₂ or NH₃ at temperatures of 600 to 2000°C.

10. Use of the polymeric boro- and aluminosilazanes according to one or more of claims 1 to 8 for the production of ceramic fibres or coatings in the Si/Al/N/C or Si/B/N/C system by pyrolysis in an inert atmosphere containing N₂ or NH₃ at temperatures of 600 to 2000°C.

## Revendications

1. Aluminosilazanes polymères répondant à la formule générale de structure 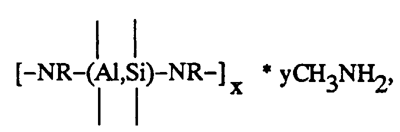 chaque atome de Si, Al étant coordonné avec 4 atomes d'azote, caractérisés en ce que chaque atome d'azote porte un groupe organique R consistant en un groupe alkyle en C₁-C₆, vinyle, phényle, et x est un nombre supérieur à 5.

2. Aluminosilazanes polymères selon la revendication 1, caractérisés en ce qu'ils ont une teneur en chlorure inférieure à 20 ppm.

3. Borosilazanes polymères répondant à la formule générale de structure 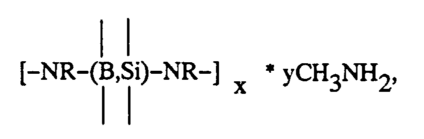 chaque atome de Si étant coordonné avec 4 atomes d'azote et chaque atome de B étant coordonné trois fois avec au moins deux atomes d'azote et au maximum 1 atome d'hydrogène, caractérisés en ce que chaque atome d'azote porte un groupe organique R consistant en un groupe alkyle en C₁-C₆, vinyle, phényle, et x est un nombre supérieur à 5.

4. Borosilazanes polymères selon la revendication 3, caractérisés en ce qu'ils ont une teneur en chlorure inférieure à 20 ppm.

5. Procédé de préparation des aluminosilazanes polymères selon une des revendications 1 ou 2, caractérisé en ce que l'on condense un tétrakisorganoaminosilane de formule Si(NHR)₄, dans laquelle R = alkyle en C₁-C₆, vinyle, phényle, dans un solvant organique, avec un composant apportant AlH₃, avec libération de H₂.

6. Procédé selon la revendication 5, caractérisé en ce que l'on utilise en tant que composant apportant AlH₃ un composé AlH₃*Y pour lequel Y est une base de Lewis telle que S(CH₃)₂, N(CH₃)₃, C₅H₅N, S(C₂H₅)₂, P(CH₃)₃, AsPh₃, le tétrahydrofurane, O(CH₃)₂, O(C₂H₅)₂, CNCH₃.

7. Procédé de préparation des borosilazanes polymères selon une des revendications 3 ou 4, caractérisé en ce que l'on condense un tétrakisorganoaminosilane de formule Si(NHR)₄, dans laquelle R = alkyle en C₁-C₆, vinyle, phényle, dans un solvant organique, avec un composant apportant BH₃, avec libération de H₂.

8. Procédé selon la revendication 5, caractérisé en ce que l'on utilise en tant que composant apportant BH₃ un complexe BH₃*Y, Y représentant une base de Lewis telle que S(CH₃)₂, N(CH₃)₃, C₅H₅N, S(C₂H₅)₂, P(CH₃)₃, AsPh₃, le tétrahydrofurane, O(CH₃)₂, O(C₂H₅)₂, CNCH₃.

9. Utilisation des boro- et alumino-silazanes selon une ou plusieurs des revendications 1 à 8, pour la préparation de matières céramiques du système Si/Al/N/C ou Si/B/NC par pyrolyse à des températures de 600 à 2000°C en atmosphère inerte contenant N₂ ou NH₃.

10. Utilisation des boro- et alumino-silazanes polymères selon une ou plusieurs des revendications 1 à 8 pour la préparation de fibres céramiques ou l'application de revêtements céramiques du système Si/Al/N/C ou Si/B/N/C par pyrolyse à des températures de 600 à 2000°C en atmosphère inerte contenant N₂ ou NH₃.
